# EUROPEAN PATENT APPLICATION

(11) **EP 4 516 450 A1**
(43) Date of publication of application: **05.03.2025**
(21) Application number: 24195937.8
(22) Date of filing: 22.08.2024
(51) Int. Cl.: B23Q 11/00, B27M 1/08

(54) **SUCTION SYSTEM FOR THE SHAVINGS OF A MACHINE TOOL**

(30) Priority: 30.08.2023 IT 202300017832
(71) Applicant: SCM Group S.p.A., 47921 Rimini (RN) (IT)
(72) Inventor: SEVERINI, Cesare, 47921 Rimini (IT); FERRI, Mirko, 47921 Rimini (IT); MAZZA, Michele, 47921 Rimini (IT); BAGGIARINI, Elia, 47921 Rimini (IT)
(74) Representative: Gallo, Gianluca

(57) **Abstract**

A suction system (2) for extracting the shavings produced by a tool coupled to a chuck (5) of a machine (1) for machining wood,
wherein the suction system (2) comprises:

- an external suction hood (3); and

- an internal suction hood (4),
wherein the external suction hood (3) comprises:

- a main top opening which is fluid-dynamically connectable to a negative pressure source;

- a main bottom opening (30); and

- an outside wall (31) which extends between the main top opening
and the main bottom opening (30) to define a main suction chamber, wherein the internal hood (4) comprises:

- a secondary top opening which is fluid-dynamically connectable to a negative pressure source;

- a secondary bottom opening (40); and

- an inside wall (41) which extends between the secondary top opening and the secondary bottom opening (40) to define a secondary suction chamber,
and wherein, in a view along an operating axis (A), the outside wall (31) and the inside wall (41) are, in use, configured surround the chuck (5), and the main bottom opening (30) surrounds the secondary bottom opening (40).

## Description

This invention relates to a machine for machining wood or comparable materials, such as, for example, wood by-products, aluminium, plastic and composites and a suction system for extracting the shavings produced by the machine itself.

More specifically, this invention relates to a Computer Numerical Control (CNC) machining centre, hereinafter abbreviated MC, in particular for nesting processes, and a suction system for extracting the shavings produced by the nesting MC during the machining of a panel (or workpiece). Hereinafter in this disclosure, reference is made mainly to a machine for machining wood, in particular a nesting MC having an uninterrupted work table for supporting the panel to be machined, a vacuum pump fluid-dynamically connected to the work table to hold the panel on the work table, and a sacrificial panel placed between the work table and the panel to be machined. However, it should be borne in mind that the machine for machining wood according to this invention might have an interrupted work table, typical of nesting MCs, while remaining within the scope of protection defined by the appended claims. In effect, the machine for machining wood according to this invention might, for example, have a work table comprising bars with a system for holding down the workpiece to be machined using, for example, clamps or suction cups, a multi-stage work table, a work table with a conveyor belt or a work table with a movement chain. In particular, the suction system, which is also an object of this invention, might be applied to machines for machining wood having different types of worktables, while remaining within the scope of protection defined by the appended claims.

Nesting is a method of organizing machining processes to allow obtaining the highest number of parts from a single large template. Thanks to suitable software, this machining method thus allows placing as many parts as possible, the final parts required, in a limited space represented by the starting panel, with the aim of minimizing the amount of scrap (or waste) of raw material, that is, of the starting panel, or of reducing the time needed to make the final parts. Typically, these two aims represent a technological compromise. In the case where the cutting pattern reproduced by the nesting MC on the panel to be machined has only straight cuts, nesting machining may be likened to panel sawing, where a single large panel is cut into a multiplicity of rectangular parts, widely used in the furniture industry to make what are known as "cabinets", which are the basic blocks used for the manufacture of kitchen furniture, or other pieces of furniture.

As is known, nesting MCs have a work table, also called "multifunction table", i.e. an uninterrupted supporting table, typically made of aluminium, designed to support the panel to be machined. Placed between the panel to be machined and the multifunction table there is a panel, known as "sacrificial" panel, typically made of medium density fibreboard (MDF), whose purpose is to protect the multifunction table during machining which involves cutting through the panel to be machined. The multifunction table has a series of openings or holes which allow the top surface of the multifunction table to be placed in fluid-dynamic communication with one or more vacuum pumps, or volumetric pumps. The sacrificial panel is permeable to air, so the negative pressure generated by the volumetric pump acts on the panel to be machined to hold it firmly against the multifunction table.

Nesting MCs are also provided with a machining unit which is movable, typically along three Cartesian axes which define the axes X, Y and Z of the MC. The machining unit typically comprises a chuck to which a machining tool is removably coupled. The machining tool, rotating on the chuck (for example, an electric chuck) can machine the panel by stock removal. Besides the tools, the chuck can also support tool units (also called aggregates) such as, for example, right-angle tools, sawing units or other machining means which are more complex, and often more cumbersome, than a tool.

Hereinafter in this disclosure, reference is made mainly to a tool coupled to the chuck. However, it should be borne in mind that, as stated, the chuck may support a tool or a tool unit in a perfectly interchangeable manner. The tool may be movable relative to the multifunction table according to one or more rotary axes, for example, two rotary axes called B and C. In this particular case, the tool is movable as a whole relative to the multifunction table according to five axes: three Cartesian axes (X, Y, Z) and two rotary axes (B, C).

In order to extract the shavings produced by the tool during machining of the panel, the machining unit comprises a suction system which in turn comprises a hood, or extractor, for extracting the shavings. During its operation, the hood is operatively in contact with the multifunction table so as to completely surround the tool to create a shavings suction chamber. The hood has the purpose of intercepting and capturing the shavings ejected by the tool so as to stop them and hold them within. The hood is fluid dynamically connected to a negative pressure source, for example, a centrifugal pump, which generates a negative pressure inside it. The fluid-dynamic connection is typically embodied by a pipe (or duct), for example, a corrugated, flexible plastic hose or a smooth, rigid metal pipe. Thanks to the negative pressure inside the hood, the shavings produced by the tool are extracted by suction through the pipe, which places the hood itself in fluid-dynamic communication with the second negative pressure source. To ensure flexible use, the nesting MC may be equipped both with large tools (for example, for contouring processes) and with small tools (for example, for boring or panel sawing/nesting processes). Thus, the tool may be large in overall size. Therefore, since they have to surround the tool completely, shavings suction hoods of nesting MCs are typically large in size, so they can adapt to all kinds of machining processes, that is to say, to all types of tools and to the possible configurations that these can adopt during machining.

Figure 1 of patent document EP3427895A2 shows an example of a shavings suction system according to the prior art, where a suction hood is associable with a spindle which rotationally supports a tool for machining a workpiece made of wood or comparable material. The spindle is in turn rotatable about a first axis of rotation and a second axis of rotation and is movable by support means substantially parallel to a triplet of axes. It is evident that the suction system of the prior art is inefficient. In effect, in order to be able to adapt to any type of machining process and configuration adopted by the tool, the hood present in the suction system of the prior art has a large suction chamber. Therefore, the negative pressure inside it may not be enough to provide the suction needed to extract the shavings unless a very large amount of energy is used to generate a very strong negative pressure. Besides being economically disadvantageous, a very strong negative pressure inside the hood might, however, interfere with the panel to be machined, making it less stable on the multifunction table. Furthermore, a very strong negative pressure inside the hood might interfere with the parts being machined, which might move out of place, thereby compromising the final quality of the parts themselves. On the other hand, an inefficient suction system leads to the presence of shavings (dirt) on the panel to be machined and, in particular, on finished parts. Wooden shavings, like swarf of other machined materials, may be dangerous to people and to the surrounding environment and may cause accidents (wooden shavings, for example, are highly inflammable). It is therefore very risky for shavings produced during machining to not be collected and extracted correctly. In addition, the shavings might spoil what is known as the "aesthetic surface" of the finished parts, especially when automatic means are used to unload the parts. This inefficiency is all the greater when small-sized tools, such as, for example, milling cutters for nesting (or panel sawing) applications are used, which constitute the main applications of nesting MCs.

Furthermore, Figure 3 of patent document EP3427895A2 shows hoods dedicated to the required type of machining. The different suction hoods suitable for different machining processes are changed, as required, when the tool is changed. It is evident that having to change the suction hood continually according to the tool used is onerous on the operator and impacts negatively on the productivity of the MC.

To improve suction for extracting the shavings, the trend in MC technology is to make the hood as small as possible. For example, with reference to Figure 5 or 6 of patent document EP3427895A2, the bottom suction opening is positioned as close as possible to the tool. The suction hoods used in that case are linked mainly to a particular tool size and thus cannot be used with larger tools and aggregates. In that case, however, the MC is much less flexible and can be used for a very limited set of processes on the panel to be machined.

The aim of this disclosure is to provide a shavings extraction system to overcome the above mentioned disadvantages of the prior art.

In particular, this disclosure has for an aim to provide a shavings extraction system which is more efficient under equal conditions of energy consumption, while at the same time offering maximum flexibility in terms of the machining processes which can be performed by the nesting MC.

Another aim of the invention is to propose a shavings extraction system which uses less energy for the same efficiency, while at the same time offering maximum flexibility in terms of the machining processes which can be performed by the nesting MC.

A yet further aim of this disclosure is to provide a shavings extraction system capable of adapting its efficiency as a function of the machining process being performed.

These aims are fully achieved by the shavings extraction system of this disclosure, as characterized in the appended claims.

In particular, the machine for machining wood according to this invention may comprise a suction system for extracting the shavings produced by a tool supported in rotation by a chuck. The extraction suction system may comprise an external suction hood having an outside wall which defines a main suction chamber of large size, so as to be able to surround the chuck and a tool which is also large in size and in different configurations. The external hood thus offers maximum flexibility in terms of the machining processes which can be performed by the nesting MC.

Also, the suction system may comprise an internal suction hood having an inside wall which defines a secondary suction chamber of reduced size, particularly efficient when the chuck supports small tools such as, for example, milling cutters for nesting or panel sawing processes. In a view according to the rotation axis of the chuck, the outside wall and the inside wall both surround the chuck, and the main bottom opening of the external hood surrounds the secondary bottom opening of the internal hood. The internal hood thus ensures reduced energy consumption for the same efficiency during machining with tools of small size. Furthermore, the internal hood offers higher efficiency for the same energy consumption during machining with tools of small size.

Furthermore, the external and/or the internal hood can move along an operating axis which may, for example, be parallel to the rotation axis of the chuck and/or to the vertical axis of the MC, which is perpendicular to the work table, between a non-operating position, where they are raised relative to the work table, and an operating position, where they are lowered. At the operating position, the external and/or the internal hood may be configured to be operatively in contact with, or supported by, the work table of the nesting MC. Furthermore, the external hood and the internal hood may be at the non-operating position simultaneously so that an operator, for example, can easily carry out operations (for example, maintenance work) on the chuck or on the tool. Also, the external hood may be at the operating position while the internal hood is at the non-operating position, and vice versa, working alternately. Also, the external hood and the internal hood may be at the operating position simultaneously so as to create a joint suction effect around the tool. In this case, the two suction chambers, respectively of the external hood and of the internal hood, can work jointly on the work table, around the chuck and the tool, optimally distributing the flow generated by the negative pressure source. For this purpose, the extraction system according to the invention may comprise a flow regulator (comprising, for example, one or more valves, one or more deviators, one or more chokes), configured to vary the flow inside the external hood and/or the internal hood, in particular inside the duct of the external hood and/or of the internal hood. In effect, the regulator may, for example, comprise a valve located at the duct of the external hood and/or a valve located at the duct of the internal hood, so as to regulate the flow inside the external hood and/or inside the internal hood, and in particular inside the duct of the external hood and/or the internal hood. Furthermore, the duct of the internal hood may be fluid-dynamically coupled to the duct of the external hood, for example upstream of a valve present in the duct of the external duct. By suitably adjusting the opening of the valve or valves, it is possible, for example, to divide the suction between the external hood and the internal hood, to apply the suction entirely in the internal hood or in the external hood, or implement other suction logics to optimize the extraction of shavings by the suction system as a function, for example, of machining or other parameters.

This and other features will become more apparent from the following description of a preferred embodiment, illustrated purely by way of non-limiting example in the accompanying drawings, in which:
- Figure 1 shows a perspective view of a machine for machining wood comprising a shavings extraction system according to the invention;
- Figure 2 shows a nesting cutting pattern of a panel to be machined;
- Figure 3 shows a perspective view of a detail of the machine for machining wood comprising the shavings extraction system according to the invention;

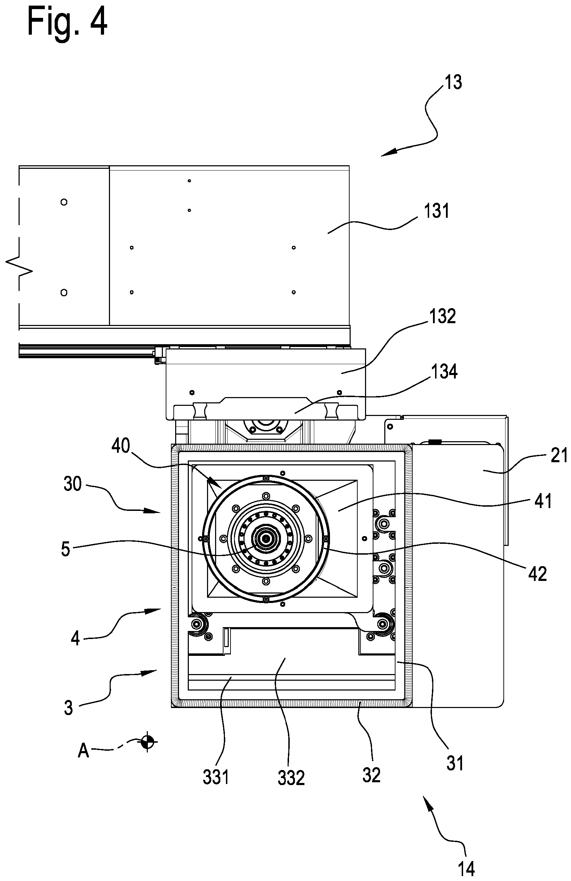

- Figure 4 shows a bottom view of the detail of the machine for machining wood comprising the shavings extraction system according to the invention;
- Figure 5 shows a side view of the detail of the machine for machining wood comprising the shavings extraction system according to the invention in a first operating configuration; and
- Figure 6 shows a side view of the detail of the machine for machining wood comprising the shavings extraction system according to the invention in a second operating configuration.

Moreover, hereinafter in this disclosure, directional terms such as "right", "left", "front", "rear", "top", "bottom", "upper", "lower", "lateral" etc. are used with reference to the accompanying drawings. Since components and/or elements and/or embodiments of this invention may be positioned and/or operated in several different orientations, the directional terms are used solely by way of non-limiting example.

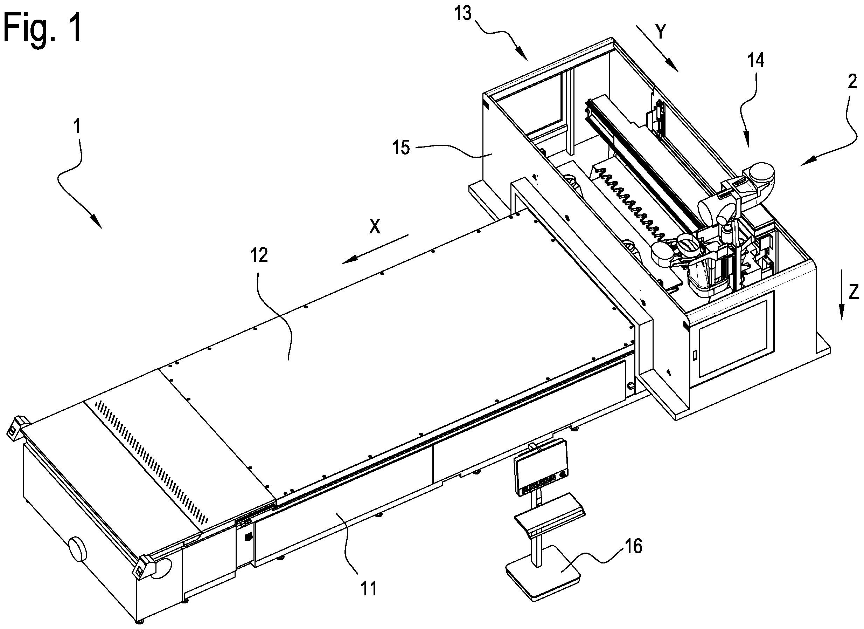

Figure 1 shows a machine 1 for machining wood, in particular, a nesting MC. The machine 1 has a bed 11 whose purpose is to support all the fixed and movable parts of the machine 1 itself.

Coupled to the bed 11 is an uninterrupted work table 12, also called multifunction table, made of aluminium, for example. The work table 12 is horizontal, that is to say, substantially parallel to the supporting surface of the bed 11, and extends along a longitudinal axis X and along a transverse axis Y. However, it should be borne in mind that the work table 12 might also be vertical or inclined (again with reference to the supporting surface of the bed 11), without departing from the scope of protection defined by the appended claims. The work table 12 has the purpose of supporting the panel to be machined. The work table 12 also has the purpose of firmly holding the panel P during machining operations carried out on the panel P itself. For that purpose, the work table 12 may be provided with holes, which may be open or closed, and which are fluid-dynamically connected, or coupled, to a vacuum pump, more specifically, a volumetric pump. The work table 12 may also be provided with grooves for inserting suitable gaskets acting in conjunction with the holes to define the areas of the work table 12 to which negative pressure is applied. On the work table there may be what is known as a "sacrificial" panel, whose purpose is to protect the work table 12 during operations which involve cutting through the panel P. The sacrificial panel may be made, for example, of MDF and is thus air permeable. The panel P is therefore held in place by the negative pressure which is generated by the vacuum pump and which passes through the sacrificial panel.

Coupled to the bed 11 is a movement system 13 whose purpose is to move a tool for machining the panel P along a triplet of orthogonal axes (Cartesian axes). In particular, the movement system 13 may comprise a crossbar 131 which extends along the transverse axis Y and is slidably coupled to the bed 11 so that it can be moved by a first actuator (for example, a synchronous brushless motor, or other type of actuator not shown in the drawings) along the longitudinal axis X, above the work table 12. The movement system 13 also comprises a transverse carriage 132 slidably coupled to the crossbar 131 so that it can be moved by a second actuator 133 (for example, a synchronous brushless motor, or other type of actuator not shown in the drawings) along the transverse axis Y, orthogonal to the longitudinal axis X. Furthermore, the movement system 13 comprises a vertical carriage 134 slidably coupled to the transverse carriage 132 so that it can be moved by a third actuator 135 (for example, a synchronous brushless motor, or other type of actuator not shown in the drawings) along the vertical axis Z, orthogonal to the longitudinal axis X and to the transverse axis Y.

The machine 1 comprises a machining unit 14 coupled to the vertical carriage 134. The machining unit comprises a chuck 5, in particular an electric chuck to support and rotationally drive a tool for machining the panel P. The tool, therefore, may be moved, in use, on the work table 12 along three Cartesian axes, in particular along the longitudinal axis X, the transverse axis Y and the vertical axis Z. However, it should be borne in mind that the machining unit 14 might also have one or more rotation axes, for example, a first rotation axis and a second rotation axis, so that the tool can be moved along a total of five axes, three linear axes and two rotary axes, while remaining within the scope of protection defined by the appended claims.

The movement system 13 and the machining unit 14 may be enclosed within a side panel 15, as shown for example in Figure 1. The side panel 15 has a safety function. In effect, the side panel 15 may incorporate safety systems (for example, comprising contact sensors or contactless sensors) to detect possible impacts between the movable parts of the machine 1 and an operator. Furthermore, the side panel has the purpose of preventing the operator from coming too close to the moving parts of the machine 1 or to dangerous parts, such as the chuck 5 or the tool. The side panel also has the purpose of intercepting parts of the machine 1, such as, for example, tool plates, which might accidentally come loose and be propelled at high speed towards an operator. The side panel 15 may be coupled to the movement system and moved as one therewith.

By moving along the vertical axis Z, the tool can move towards or away from the work table 12, hence from the panel to be machined. That way, it is also possible to define the depth the tools cut into the panel P to be machined. For nesting or panel sawing machining processes, the tool will be positioned at a predefined height over the panel P so that it cuts through the panel P itself. By so doing, the parts resulting from the machining process will be separated completely from the starting panel P.

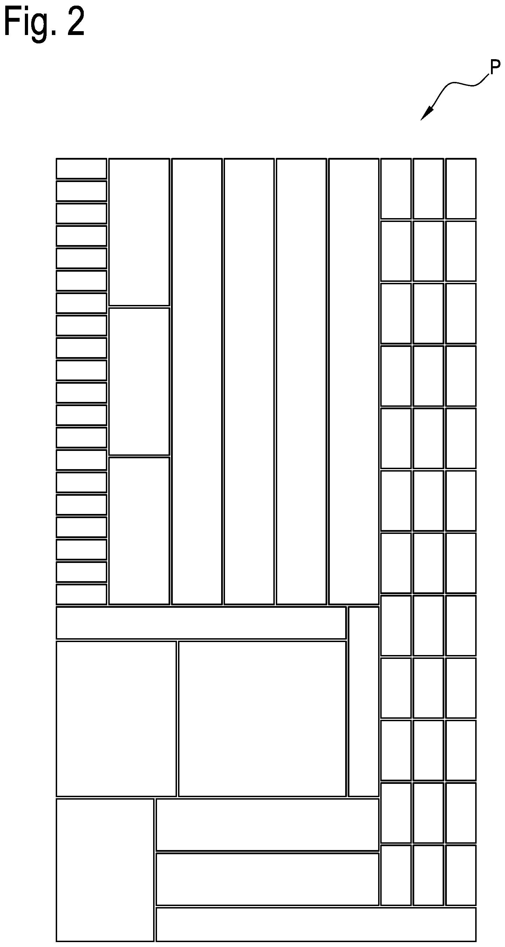

Figure 2 shows an example of a cutting pattern of a panel P to be machined. The specific example represented in Figure 2 is characterized by cuts which are orthogonal to each other and thus, we can also say that the panel P is sawn into a multiplicity of desired parts.

The machine 1 has an operator position 16 which may comprise a workstation from where an operator can program and control the machine 1. Through the operator position 16, therefore, it is possible to program or load a machine program containing, for example, the cutting pattern shown in Figure 2, so that the machine 1 can automatically make the cuts in the panel P needed to obtain the desired parts using the tool driven in rotation by the chuck 5.

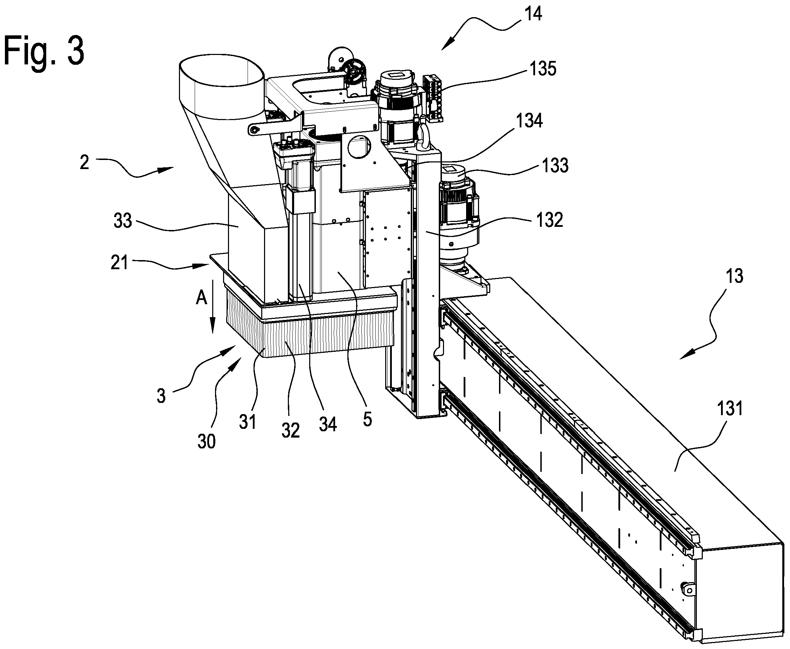

As shown in the detail illustrated in Figure 3, the machining unit 14 may comprise an extraction suction system 2, associated with the chuck 5, to extract the shavings produced by the tool during machining of the panel P. The extraction suction system 2 may move as one with the chuck and is therefore movable along the three orthogonal axes, in particular the longitudinal axis X, the transverse axis Y and the vertical axis Z.

The extraction suction system 2 may comprise an external suction hood 3. The external suction hood 3 may comprise a main duct 33 for extracting the shavings. The main duct 33 may be fluid-dynamically connected or coupled at one end of it to a negative pressure source, in particular, a vacuum pump, and more particularly, a centrifugal pump (or impeller). Typically, the centrifugal pump does not form part of the machine 1 but may form part of an external extraction system. The main duct 33 may comprise a valve 332 positioned and configured to regulate the flow inside the main duct 33. The valve 332 may, for example, be what is known as a "butterfly valve" having a rotating rod 331. The valve 332 may be driven, for example, by an actuator which may be, for example, a piston and related crank or an electric motor, for example coupled to the rod 331. The other end of the main duct 33 may be fluid-dynamically connected or coupled to a main top opening of the external hood 3. The main top opening may be an opening present in a plate 21 of the extraction suction system 2. The main top opening may have different shapes, for example rectangular or circular, and may be parallel to the work table 12. However, the top opening might also be, for example, orthogonal to the work table 12 or have different inclination angles, without thereby departing from the scope of protection afforded by the appended claims. Therefore, the plate 21 might also not be flat and not parallel to the work table 12.

The external hood 3 comprises an outside wall 31 which extends between the main top opening and a main bottom opening 30, in particular between the plate 21 and the main bottom opening 30.

Like the main top opening, the main bottom opening 30 may also have different shapes, for example rectangular or circular, and may or may not be parallel to the work table 12. In particular, the main bottom opening 30 allows the tool, which is surrounded by the outside wall 31, to freely access the panel P to be machined.

The shape and size of the outside wall 31 are such as to be able to surround the chuck 5, or at least part of it, and, if necessary, the tool, or at least part of it, so as to intercept, and extract the shavings by suction. The term "surround" is used generically to mean to "encircle" an object or "limit it all around".

The outside wall 31, the main top opening and the main bottom opening 30, or the outside wall 31, the plate 21, the main top opening and the main bottom opening 30 define a main suction chamber. The main suction chamber may, therefore, be in fluid-dynamic connection with the negative pressure source and for that reason, may contain a negative pressure whose purpose is to capture the shavings produced by the tool during machining of the panel P, and to extract the shavings by suction through the main duct 33 towards the outside of the machine 1 into a zone where the shavings are collected and stored.

The terms "top" and "bottom" are not intended to be limited to the geometric-spatial interpretation suggested by the examples shown in the drawings appended hereto.

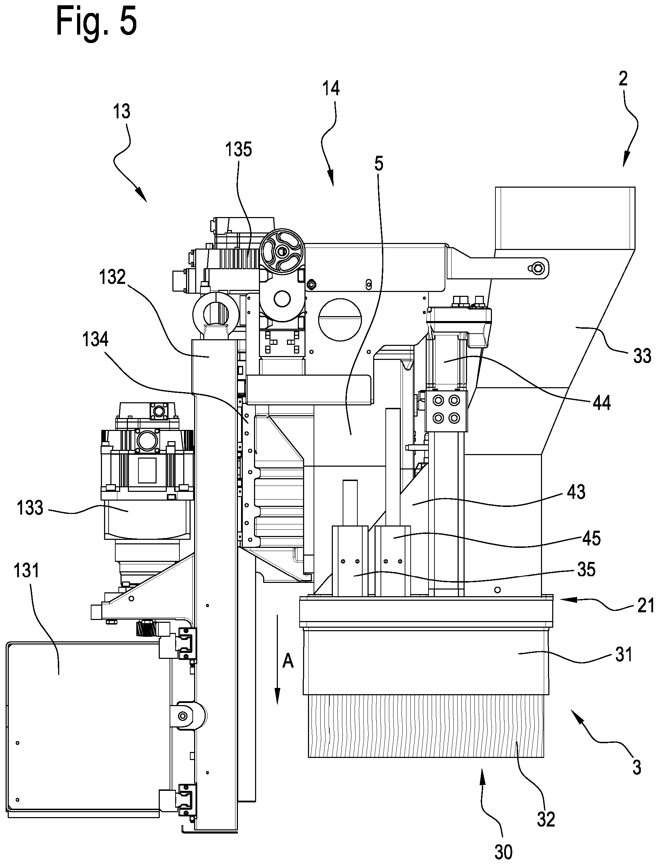

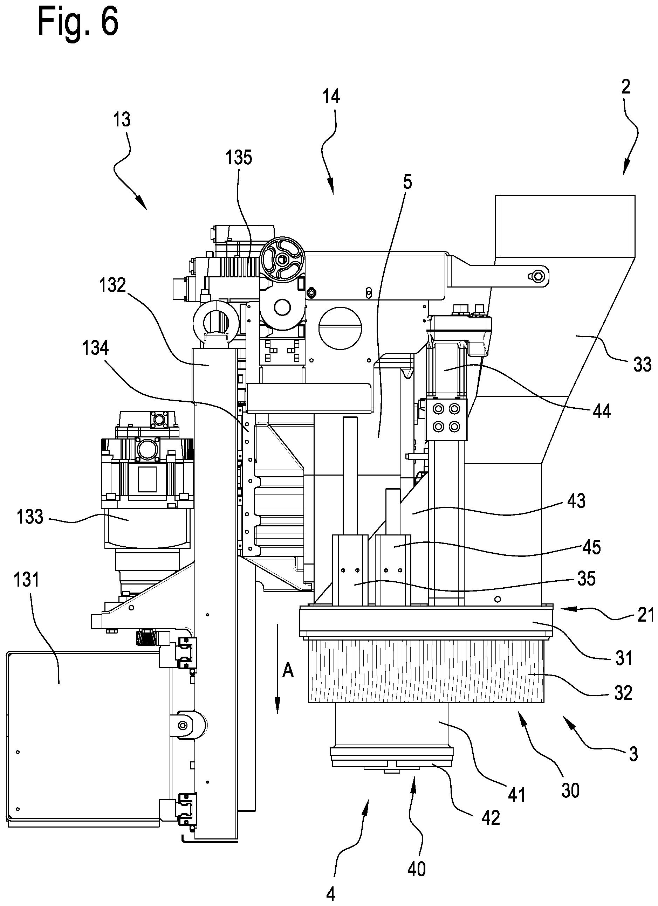

The outside wall 31 is movable relative to the machining unit 14, along an operating axis A, towards and away from the work table 12, that is, from the panel P to be machined, as shown, for example, in Figures 5 and 6. The operating axis A may, for example, be parallel to the vertical axis Z and may, in particular, be perpendicular to the work table 12. The outside wall 31, when raised relative to the work table 12, is at a non-operating position, and when lowered relative to the work table 12, is at an operating position.

The outside wall 31 may, for example, comprise a concertinaed portion. Figure 5 shows the outside wall 31 at the operating position with the concertinaed portion extended, while Figure 6 shows the outside wall 31 at the non-operating position with the concertinaed portion retracted. Besides a concertina system, other solutions are imaginable to make the outside wall 31 movable along the operating axis A: for example, a system of telescopic elements or elastic elements might be used. The movement of the outside wall 31 along the operating axis A is accomplished via a main actuator 34. The main actuator 34 may be, for example, an electric motor or a piston. In order to guide the movement of the outside wall 31, the extraction system 2 may comprise a main guide 35, such as, for example, a cylinder associated with a bushing, or an idle piston.

With reference to Figure 5, when the outside wall 31 is at the operating position, the external hood 3 may be operatively in contact with the panel P to be machined, closing the bottom of the main suction chamber with the panel P itself. In this configuration, the tool can machine the panel P and the external hood 3 can intercept and extract by suction the shavings produced during machining.

Furthermore, the outside wall 31 may comprise external brushes 32 (also called bristles) disposed along the perimeter of the main bottom opening 30. The external brushes 32 are configured to come into operative contact with the work table 12, that is, with the panel P to be machined. The external brushes 32 are preferably very long, so as to maximize the flexibility of the external hood 3.

The terms "raised" and "lowered" must be interpreted with reference to the movement "away from" and "towards" the work table 12, respectively.

The extraction suction system 2 may also comprise an internal suction hood 4. The internal suction hood 4 may comprise a secondary duct 43 for extracting the shavings. The secondary duct 43 may be fluid-dynamically connected or coupled at one end of it to a negative pressure source, in particular, a vacuum pump, and more particularly, a centrifugal pump (or impeller). Typically, the centrifugal pump does not form part of the machine 1 but may form part of an external extraction system. The negative pressure source may be distinct from that described for the external hood 3, or it may be the same source. The secondary duct 43 may comprise an additional valve positioned and configured to regulate the flow inside the secondary duct 43. The additional valve may, for example, be what is known as a "butterfly valve" having an additional rotating rod. The additional valve may be driven, for example, by an additional actuator which may be, for example, a piston and related crank or an electric motor, for example coupled to the additional rod. The other end of the secondary duct 43 may be fluid-dynamically connected or coupled to a secondary top opening of the internal hood 4. The secondary top opening may be an opening present in the plate 21 of the extraction suction system 2. The main secondary top opening may have different shapes, for example rectangular or circular, and may be parallel to the work table 12. However, the secondary opening might also be, for example, orthogonal to the work table 12 or have different inclination angles, without thereby departing from the scope of protection afforded by the appended claims. Therefore, the plate 21 might also not be flat and not parallel to the work table 12, as specified above in the description of the external hood 3.

The internal hood 4 comprises an inside wall 41 which extends between the secondary top opening and a secondary bottom opening 40, in particular between the plate 21 and the secondary bottom opening 40.

Like the secondary top opening, the secondary bottom opening 40 may also have different shapes, for example rectangular or circular, and may or may not be parallel to the work table 12. In particular, the secondary bottom opening 40 allows the tool, which is surrounded by the inside wall 41, to freely access the panel P to be machined.

The shape and size of the inside wall 41 are such as to be able to surround the chuck 5, or at least part of it, and, if necessary, the tool, or at least part of it, so as to intercept, and extract the shavings by suction.

The inside wall 41, the secondary top opening and the secondary bottom opening 40, that is, the inside wall 41, the plate 21, the secondary top opening and the secondary bottom opening 40 define a secondary suction chamber. The secondary suction chamber may, therefore, be in fluid-dynamic connection with the negative pressure source and for that reason, may contain a negative pressure whose purpose is to capture the shavings produced by the tool during machining of the panel P, and to extract the shavings by suction through the secondary duct 43 towards the outside of the machine 1 into a zone where the shavings are collected and stored.

The inside wall 41 is movable relative to the machining unit 14, along the operating axis A, towards and away from the work table 12, that is, from the panel P to be machined, as shown, for example, in Figures 5 and 6. The inside wall 41, when raised relative to the work table 12, is at a non-operating position, and when lowered relative to the work table 12, is at an operating position.

The inside wall 41 may, for example, comprise a concertinaed portion. Figure 6 shows the inside wall 41 at the operating position with the concertinaed portion extended, while Figure 5 shows the inside wall 41 at the non-operating position with the concertinaed portion retracted. As in the case of the outside wall 31, besides a concertina system, other solutions are imaginable to make the inside wall 41 movable along the operating axis A: for example, a system of telescopic elements or elastic elements might be used. The movement of the inside wall 41 along the operating axis A is accomplished via a secondary actuator 44. The secondary actuator 44 may be, for example, an electric motor or a piston. In order to guide the movement of the inside wall 41, the extraction system 2 may comprise a secondary guide 45, such as, for example, a cylinder associated with a bushing, or an idle piston.

With reference to Figure 6, when the inside wall 41 is at the operating position, the internal hood 4 may be operatively in contact with the panel P to be machined, closing the bottom of the secondary suction chamber with the panel P itself. In this configuration, the tool can machine the panel P and the internal hood 4 can intercept and extract by suction the shavings produced during machining.

The inside wall 41 may comprise internal brushes 42 (also called bristles) disposed along the perimeter of the secondary bottom opening 40. The internal brushes 42 are configured to come into operative contact with the work table 12, that is, with the panel P to be machined. The internal brushes 42 are preferably very short compared to the external brushes 32, so as to maximize the efficiency of the internal hood 4.

With reference to Figure 3, in a view along an operating axis, in particular an operating axis perpendicular to the work table 12, which may coincide with the vertical axis Z and/or with the axis of rotation of the chuck, the outside wall 31 and the inside wall 41 may both surround the chuck 5. Further, the main bottom opening 30 of the external hood 3 may surround the secondary bottom opening 40 of the internal hood 4. In particular, the ratio between the area of the main bottom opening 30 and the area of the secondary bottom opening 40 may be, for example, greater than or equal to 3, in particular greater than or equal to 6. That way, it is clear that the external hood 3 may be configured to be able to surround at least a portion of the chuck and, if necessary, a tool of large size (where "large" is understood as being large compared to the tools normally used for boring or nesting, such as, for example, vertical milling cutters), with the result that it is particularly versatile but not very efficient. Furthermore, from these examples, it is clear that the internal hood 4 may be configured to be able to surround at least a portion of the chuck and, if necessary, a tool of reduced size (as, for example, the tools normally used for boring or nesting, such as vertical milling cutters), with the result that it is particularly efficient under equal conditions of energy consumption. Furthermore, the internal hood 4 may have a secondary bottom opening 40 which is, for example, less than or equal to 200 mm in size, in particular, less than or equal to 150 mm, and more particularly, less than or equal to 65 mm (which substantially coincides with the standard diameter of 63 mm tool tapers). The term "size" is used to mean a linear geometrical dimension of the secondary bottom opening 40 itself, such as, for example, a diameter (if it is circular in shape) or a length (width, or depth, if it is rectangular in shape). The size less than or equal to 200 mm, in particular, less than or equal to 150 mm, and more particularly, less than or equal to 65 mm, may have the advantage of making it easier to approach the tool holder during tool changing operations.

The external hood 3 and/or the internal hood 4 can move either coordinatedly (for example, via a single actuator or via two distinct, but coordinated, actuators) or independently (for example, via two distinct actuators), along an operating axis A, which may be, for example, parallel to the axis of rotation of the chuck, to the vertical axis Z of the machine 1 or perpendicular to the work table 12, between a non-operating position, where they are raised relative to the work table 12, and an operating position, where they are lowered. At the operating position, the external hood 3 and/or the internal hood 4 may be configured to be operatively in contact with, or supported by, the work table 12. Furthermore, the external hood 3 and the internal hood 4 may be at the non-operating position simultaneously so that an operator, for example, can easily carry out operations (for example, maintenance work) on the chuck 5 or on the tool.

Also, the external hood 3 may be at the operating position while the internal hood 4 is at the non-operating position, and vice versa, working alternately. Furthermore, the external hood 3 and the internal hood 4 may be at the operating position simultaneously so as to create a joint suction effect around the tool. In this case, the two suction chambers, respectively of the external hood 3 and of the internal hood 4, can work jointly on the work table 12, around the chuck 5 and the tool, optimally distributing the flow generated by the negative pressure source. For this purpose, the extraction system 2 according to the invention may use, for example, the valve 332 or the additional valve, disposed and configured, where present, to vary the flow inside the main duct 33 and the secondary duct 43.

The secondary duct 43 may be fluid-dynamically coupled to the main duct 33 so as to be a deviation therefrom. For example, the fluid-dynamic (or even mechanical) coupling point between the secondary duct 43 and the main duct 33 may be upstream of the valve 332, with reference to the negative pressure source. By suitably adjusting the opening of the valve 332 and/or of the additional valve, it is possible, for example, to divide the suction between the external hood and the internal hood, to apply the suction entirely in the internal hood or in the external hood, or implement other suction logics to optimize the extraction of shavings by the suction system as a function, for example, of machining or other parameters.

This invention has been described by way of non-limiting illustration with regard to its preferred embodiments but it is understood that variants and/or modifications can be made by experts in the trade without thereby departing from the scope of protection afforded by the claims appended hereto.

## Claims

1. A machine (1) for machining wood, comprising:
- a bed (11);
- a work table (12) coupled to the bed (11) and configured to support and hold down a panel (P) to be machined;
- a machining unit (14) for machining the panel (P); and
- a movement system (13), coupled to the bed (11) and to the machining unit (14), and configured to move the machining unit (14) along a triplet of Cartesian axes (X, Y, Z) on the work table (12),
wherein the machining unit (14) comprises:
- a chuck (5) configured to support and rotate a tool; and
- a suction system (2) configured to extract the shavings produced by the tool during machining of the panel (P),
wherein the suction system (2) comprises:
- an external suction hood (3); and
- an internal suction hood (4),
wherein the external suction hood (3) comprises:
- a main top opening which is fluid-dynamically connectable to a negative pressure source;
- a main bottom opening (30); and
- an outside wall (31) which extends between the main top opening and the main bottom opening (30) to define a main suction chamber,
wherein the internal hood (4) comprises:
- a secondary top opening which is fluid-dynamically connectable to a negative pressure source;
- a secondary bottom opening (40); and
- an inside wall (41) which extends between the secondary top opening and the secondary bottom opening (40) to define a secondary suction chamber,
and wherein, in a view along an operating axis (A), the outside wall (31) and the inside wall (41) surround the chuck (5), and the main top opening (30) surrounds the secondary bottom opening (40).

2. The machine (1) according to claim 1, wherein, in a view along an operating axis (A), the ratio between the area of the main bottom opening (30) and the area of the secondary bottom opening (40) is greater than or equal to 3.

3. The machine (1) according to either of the preceding claims, wherein the suction system (2) comprises a plate (21) which comprises the main top opening and the secondary top opening, wherein the outside wall (31) extends between the plate (21) and the main bottom opening (30), and wherein the inside wall (41) extends between the plate (21) and the secondary bottom opening (40).

4. The machine (1) according to claim 3, wherein the plate (21) comprises a further top opening, concentric with the secondary bottom opening (40) and configured to house the chuck (5).

5. The machine (1) according to any one of the preceding claims, wherein the outside wall (31) is movable along the operating axis (A) towards and away from the work table (12), between a non-operating position, where the outside wall (31) is distant from the work table (12), and an operating position, where the outside wall (31) is close to the work table (12).

6. The machine (1) according to any one of the preceding claims, wherein the inside wall (41) is movable along the operating axis (A) towards and away from the work table (12), between a non-operating position, where the inside wall (41) is distant from the work table (12), and an operating position, where the inside wall (41) is close to the work table (12).

7. The machine (1) according to any one of the preceding claims, wherein the external hood (3) comprises:
- a main extraction duct (33), one end of which is fluid-dynamically connectable to a negative pressure source and another end fluid-dynamically connected to the main top opening; and
- a secondary extraction duct (43), one end of which is fluid-dynamically connectable to a negative pressure source and another end fluid-dynamically connected to the secondary top opening,
wherein the main duct (33) comprises a valve (331) positioned and configured to regulate the flow inside the main duct (33).

8. The machine (1) according to claim 7, wherein the end of the secondary duct (43), fluid-dynamically connectable to a negative pressure source, is fluid-dynamically connected to the main duct (33), upstream of the valve (331), so that the secondary duct (43) is connectable to a negative pressure source via a portion of the main duct (33).

9. The machine (1) according to any one of the preceding claims, wherein the outside wall (31) comprises external brushes (32) disposed along the perimeter of the main bottom opening (30), and wherein the inside wall (41) comprises internal brushes (42) disposed along the perimeter of the secondary bottom opening (40).

10. The machine (1) according to claim 9, wherein the inside wall (41) comprises further internal brushes disposed parallel to the internal brushes (42), wherein the further internal brushes are movable relative to the internal brushes (42) along the operating axis (A), between a non-operating position, where the further brushes are raised relative to the internal brushes (42), and an operating position, where the further brushes are positioned alongside the internal brushes (42).

11. A suction system (2) for extracting the shavings produced by a tool coupled to a chuck (5) of a machine (1) for machining wood,
wherein the suction system (2) comprises:
- an external suction hood (3); and
- an internal suction hood (4),
wherein the external suction hood (3) comprises:
- a main top opening which is fluid-dynamically connectable to a negative pressure source;
- a main bottom opening (30); and
- an outside wall (31) which extends between the main top opening
and the main bottom opening (30) to define a main suction chamber, wherein the internal hood (4) comprises:
- a secondary top opening which is fluid-dynamically connectable to a negative pressure source;
- a secondary bottom opening (40); and
- an inside wall (41) which extends between the secondary top opening and the secondary bottom opening (40) to define a secondary suction chamber,
and wherein, in a view along an operating axis (A), the outside wall (31) and the inside wall (41) are, in use, configured surround the chuck (5), and the main bottom opening (30) surrounds the secondary bottom opening (40).
